(19) Europäisches Patentamt / European Patent Office / Office européen des brevets

(11) **EP 1 680 862 B1**

(12) **FASCICULE DE BREVET EUROPEEN**

(45) Date de publication et mention de la délivrance du brevet:
**03.01.2018 Bulletin 2018/01**

(21) Numéro de dépôt: **04805800.2**

(22) Date de dépôt: **03.11.2004**

(51) Int Cl.:
**H02P 8/38** *(2006.01)*

(86) Numéro de dépôt international:
**PCT/FR2004/050557**

(87) Numéro de publication internationale:
**WO 2005/043743 (12.05.2005 Gazette 2005/19)**

(54) **PROCEDE POUR LA DETECTION DE BUTEES ET DE CALAGE D ' UN MOTEUR  PAS-A-PAS ET MOTEUR PAS-A-PAS A DETECTEUR DE BUTEE**

SCHRITTMOTOR-ANHALT- UND -STILLSTANDDETEKTIONSVERFAHREN UND MIT EINEM ANHALT-DETEKTOR AUSGESTATTETER SCHRITTMOTOR

STEPPER MOTOR STOP AND STALLING DETECTION METHOD, AND STOP-DETECTOR-EQUIPPED STEPPER MOTOR

(84) Etats contractants désignés:
**CH DE FR GB IT LI**

(30) Priorité: **03.11.2003 FR 0350772**

(43) Date de publication de la demande:
**19.07.2006 Bulletin 2006/29**

(73) Titulaire: **Moving Magnet Technologies
25000 Besançon (FR)**

(72) Inventeurs:
• **RONDOT, Eric
F-25410 BERTHELANGE (FR)**

• **PRUDHAM, Daniel
F-25220 THISE (FR)**

(74) Mandataire: **IP Trust
2, rue de Clichy
75009 Paris (FR)**

(56) Documents cités:
**DE-A- 2 361 003       DE-A- 3 516 502
DE-U- 29 609 570      FR-A- 2 721 456
US-A- 5 666 066       US-A1- 2002 173 935**

EP 1 680 862 B1

**Description**

La présente invention concerne le domaine des moto-réducteurs de type pas-à-pas (moteurs polyphasés synchrones, commandés dans un mode pas-à-pas), et plus particulièrement les motoréducteurs commandés dans un mode micro-pas.

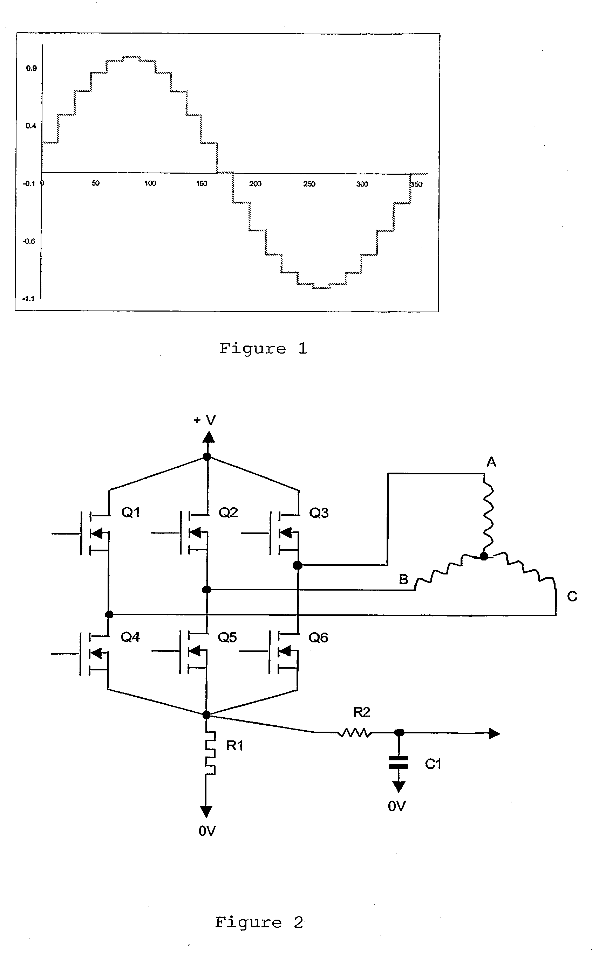

Pour bien comprendre le principe de l'invention, on rappellera que le mode de commande pas-à-pas conduit à des incréments de rotation, au niveau du rotor, appelé pas entiers, qui correspondent, par exemple, à 6 pas entiers (respectivement 4) par période électrique du courant présent dans chaque phase, pour un moteur triphasé (respectivement diphasé). Pour réduire cet incrément de rotation, de manière, par exemple, à réduire le bruit en fonctionnement et les vibrations générées au niveau du rotor, on peut subdiviser les pas entiers en micro-pas, comme indiqué figure 1.

Pour ce faire, et contrairement au mode de pilotage en pas entier, chacune des phases du moteur doit alors être pilotée avec un courant de forme sensiblement sinusoïdale en fonction du nombre de micro-pas par pas, et dans l'exemple de la figure 2, on voit que, pour un moteur triphasé, 6 transistors seront nécessaires pour imposer simultanément dans les 3 phases du moteur 3 ondes de courant sensiblement sinusoïdales, déphasées de 120 électriques.

Les procédés de détections usuelles de butées, ou de calage, des motoréducteurs pas-à-pas utilisent des moyens de détections de la valeur de la tension induite dans les phases du moteur, dans des états particuliers des transistors de commande de ces phases (état ouvert par exemple, permettant de venir mesurer sans interférence la tension induite dans la phase non utilisée).

On voit donc que pour les moteurs polyphasés commandés en mode micropas, utilisant l'ensemble des transistors de puissance simultanément, il est difficile d'avoir accès à cette mesure de tension induite.

On trouve dans l'art antérieur des moyens de détection du blocage des moteurs pas-à-pas tels que par exemple EP 0458159, US 4,672,282, US 2003/0117100, EP 1178379, US2003/0155883 ou la valeur de la tension induite dans une des phases du moteur, ou son effet sur le courant circulant dans les bobines, est mesuré. Le gros désavantage de toutes ces solutions est la grande sensibilité aux tolérances du moteur (la tension induite est proportionnelle à la constante de couple du moteur, au nombre de spires, à la température,....), aux modes de résonances du rotor du moteur, et le taux de fiabilité de la détection est faible en fonction des évènements extérieurs.

Un autre désavantage de ces solutions, tel que mentionné dans EP 1178379 ou US 2003/0117100 par exemple, est que la détection se fait en pas entier ou en 1/2 pas, pendant des séquences bien précises de non alimentation des phases. Le désavantage de ces procédés est donc que l'information de butée n'est pas disponible de façon instantanée, nécessite pour être précise une mesure sur chaque phase, et ne permet pas d'alimenter les phases du moteur en continu.

On connaît aussi dans l'état de la technique le brevet DE2960957U concernant un circuit de détection de décrochage d'un moteur pas-à-pas ou d'un moteur synchrone à l'aide de moyens du courant moteur et d'un circuit comparateur destiné à détecter les différences dans le tracé des impulsions se présentant les unes après les autres.

On connaît encore le brevet DE2361003 décrivant un dispositif de commande pour un moteur pas à pas. Chaque bobine est alimentée par l'intermédiaire d'un premier élément de commutation commandable, dont la tension est sensiblement supérieure à la tension nominale de l'enroulement d'excitation. Le courant dans l'enroulement est proportionnel à une valeur prédéterminée.

On connaît aussi la demande de brevet américain US2002173935 concernant un dispositif de surveillance d'une machine-outil qui surveille les opérations d'usinage du travail pour augmenter le niveau de précision du rendement. Pour surveiller un courant de charge fourni à un moteur d'usinage dans des unités à un cycle qui fonctionnent depuis le début de l'usinage jusqu'à la fin de l'usinage, des points d'échantillonnage sont prélevés à des intervalles plus courts le long de l'axe temporel de l'usinage dans les zones où l'usinage est complexe, et dans les domaines où l'usinage est simple, des points d'échantillonnage sont pris à intervalles plus longs le long de l'axe temporel de l'usinage. A chaque point d'échantillonnage, les données d'échantillonnage sont stockées et subissent un traitement numérique. Ensuite, la valeur mesurée du courant de charge est comparée pour déterminer si la valeur effectivement mesurée se situe dans une plage de limite supérieure et inférieure qui est déterminée par une valeur d'écart type calculée à partir des données d'échantillonnage à chaque point d'échantillonnage.

L'objet de l'invention est de proposer un procédé fiable et robuste de détection de butée des motoréducteurs polyphasés, et plus particulièrement de ceux commandés en mode micro-pas, s'affranchissant d'une mesure de tension induite dans un état de non- alimentation des phases, par l'intermédiaire d'une mesure du courant total consommé par les N phases du moteur.

Dans son acception la plus générale, l'invention concerne un procédé de détection de butée conforme à la revendication 1 et un moto-réducteur conforme à la revendication 7.

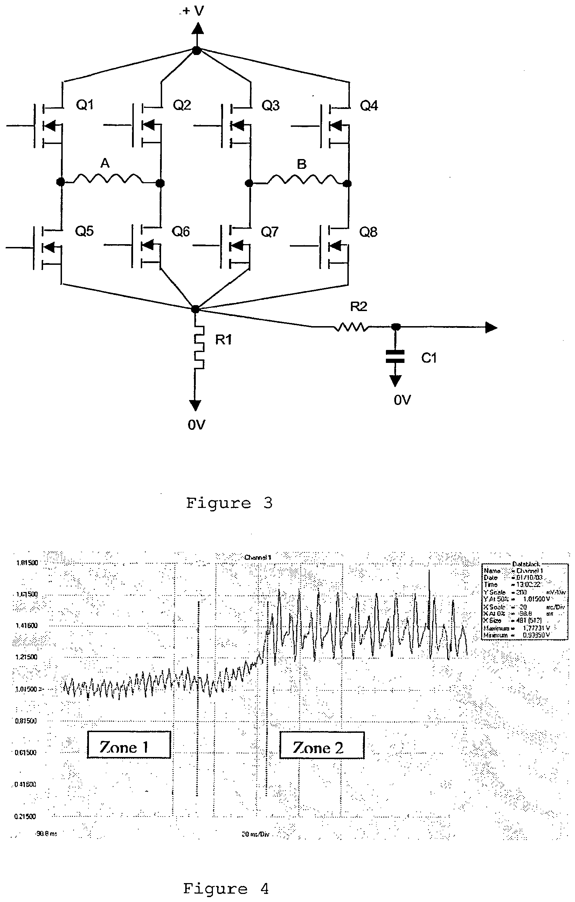

Le principe de l'invention consiste à mesurer dans la résistance d'échantillonnage R1 (figure 2 et 3) le courant total consommé dans la somme des N phases du moteur polyphasé, et à considérer le motoréducteur comme un système chargé de transformer une puissance électrique d'entrée $P_{Elee}$ (égale au produit de la tension d'alimentation +V (fig. 2 et fig. 3) par le courant total I circulant dans R1), en une puissance mécanique $P_{Mécanique}$ (égale au produit du couple fourni par le motoréducteur et de sa vitesse)et en une puissance Joule $P_{Joule}$ (égale à la somme des puissance Joule dissipée dans les N phases du moteur) :

$$P_{Elec} = U.l = P_{Joule} + P_{Mécanique}$$

$$Soit \; l = f \; (P_{Joule} + P_{Mécanique})$$

Cette formule est approximative puisqu'elle ne tient pas compte des pertes dans le réducteur, mais nous voyons bien qu'en fonction des valeurs prises par $P_{Joule}$ et $P_{Mécanique}$ il est possible d'interpréter, lors de la mesure du courant I total des phases, des conditions de fonctionnement particulières.

A titre d'exemple, la figure 4 montre l'évolution du courant total I, circulant dans la résistance R1, entre un fonctionnement en mode micropas à vitesse constante et un calage du rotor.

Avantageusement, il est possible d'associer au procédé de mesure du courant total dans les N phases, un procédé mathématique ou statistique de traitement de la variation de I, qui nous permette de bien discriminer une charge importante du motoréducteur, d'une butée ou d'un calage.

L'opération mathématique ou statistique de détection consiste à calculer une variable proportionnelle au carré de l'écart-type des valeurs du courant total échantillonné dans R1, de manière à donner de la sensibilité au procédé et à s'affranchir de toute notion de valeur absolue du courant I.

Avantageusement, le procédé de l'invention comportera une étape de détermination du couple maxi applicable par le moto-réducteur et/ou une étape de détermination de la perte du synchronisme par le rotor du motoréducteur.

L'invention sera mieux comprise à la lecture de la description suivante faisant référence aux dessins annexés où :

- la figure 1 représente une période électrique du courant d'une des phases d'un moteur polyphasé, subdivisé en micro-pas,
- la figure 2 représente le schéma électrique 30 simplifié d'un driver triphasé selon l'invention,
- la figure 3 représente le schéma électrique simplifié d'un driver diphasé selon l'invention,
- la figure 4 représente le courant total consommé dans un motoréducteur triphasé piloté en micro-pas en 35 mode tension
- la figure 5 représente le même courant total et la valeur de son écart- type élevé au carré,
- la figure 6 présente la réalisation d'un moto-réducteur diphasé pour application vanne de climatisation,
- la figure 7 présente la réalisation d'un moto-réducteur triphasé pour application vanne de climatisation.

La figure 1 représente une période électrique du courant d'une des phases d'un moteur polyphasé, subdivisée par exemple en 24 « micro-pas » par période, qui est un nombre typiquement utilisé pour mettre en oeuvre l'invention, et qui conduit à une réduction de bruit très importante par rapport à l'utilisation classique en 6 pas entiers par période électrique.

En figure 2, on trouve le schéma électrique simplifié d'un driver triphasé en mode micro-pas selon l'invention, utilisant 6 transistors Q1 à Q6, Q1 et Q4 (respectivement Q2 et Q5, Q3 et Q6) pilotant le courant traversant la phase C (respectivement B et A). La résistance R1 est une résistance d'échantillonnage qui sert à la mesure de la somme des courants IA, IB, IC traversant chaque phase, par l'intermédiaire du filtre (R2, C1). La sortie du filtre R2C1 sera traitée à l'aide du convertisseur analogique/numérique d'un micro-contrôleur par exemple.

La figure 3 représente le schéma électrique simplifié d'un driver diphasé selon l'invention, utilisant 8 transistors Q1 à Q8, où la somme des courants des 2 phases A et B est mesurée dans la résistance R1, par l'intermédiaire du filtre (R2, C1).

La figure 4 représente une vue de l'évolution de la somme du courant I des N phases d'un moteur polyphasé, mesuré dans R1, dans un mode d'alimentation en micro-pas. Le courant possède une valeur stable dans la zone 1 du graphique lors du fonctionnement synchrone, régulier et hors butée ou hors calage, du rotor du motoréducteur, avant d'évoluer vers une valeur sensiblement plus élevée et plus irrégulière dans la zone 2 du graphique, lorsque le motoréducteur est arrivé en butée.

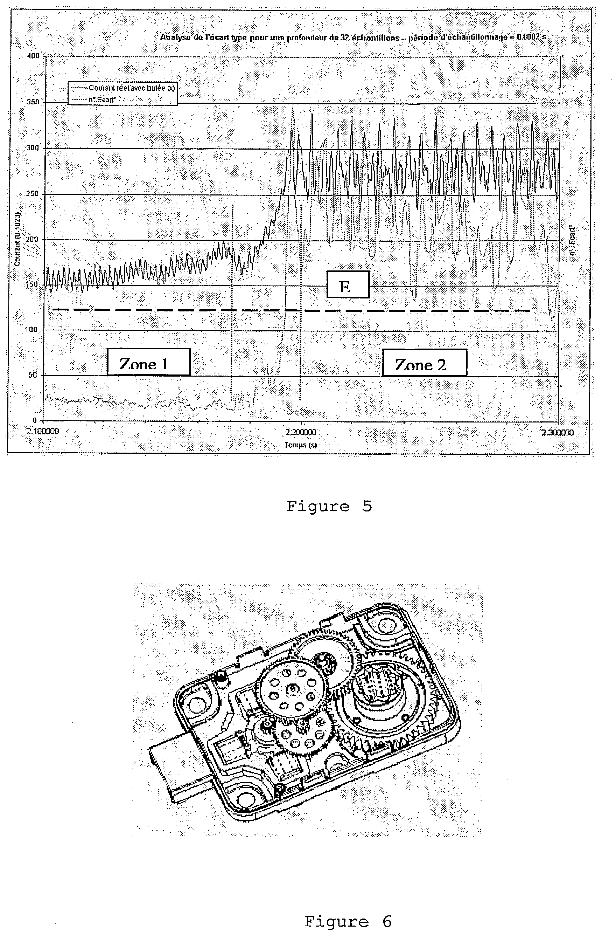

La figure 5 montre la mise en oeuvre d'un procédé mathématique ou statistique de traitement de la variation du courant I mesuré dans R1. Dans l'exemple de la figure 5, la valeur du courant I est échantillonnée, à l'aide d'un convertisseur analogique/numérique d'un micro-contrôleur par exemple, et l'écart-type $\sigma$ des valeurs xi des N échantillons est calculé :

$$\sigma = \sqrt{\dfrac{N \cdot \sum_{i=0}^{N} x_i^2 - \left(\sum_{i=0}^{N} x_i\right)^2}{N^2}}$$

De manière plus précise, la valeur $N^2 * \sigma^2$ est représentée en figure 5, en comparaison avec la valeur du courant I total des phases. On voit nettement qu'un tel procédé mathématique permet d'encore mieux discriminer les zones 1 de fonctionnement régulier, des zones 2 de fonctionnement en butée, et de fixer un seuil d'écart type E, pour les valeurs $N^2 * \sigma^2$ à partir du quel le microcontrôleur, ou l'ASIC, décide que le motoréducteur est en butée ou calé.

Par rapport aux procédés d'analyse des tensions induites des phases des motoréducteurs exposés dans l'art antérieur, on voit qu'un des grands avantages du procédé est sa mise en oeuvre de façon instantanée dès le dépassement du seuil de détection.

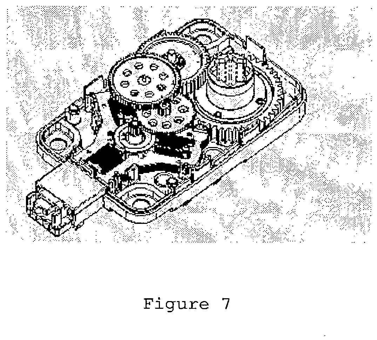

Les figures 6 et 7 représentent des vues en 3 dimensions de motoréducteurs di- ou triphasés pour vanne de climatisation automobile auxquels l'invention est plus particulièrement destinée. Les motoréducteurs ont, par exemple, des rapports de réduction de l'ordre 1/720, avec 4 étages de réduction, ce qui conduit à une certaine élasticité du réducteur. Cette raideur finie du réducteur explique le besoin de sensibilité du procédé de détection, de manière à ne pas confondre un point dur à passer par le motoréducteur et une butée. Le procédé de traitement mathématique des échantillons du courant I permet de discriminer différents états du motoréducteur tels que:

- mode synchrone régulier,
- augmentation du couple fourni par le motoréducteur,
- arrivée en butée avec décrochage du rotor du motoréducteur.

Le procédé de détection de butée ou de calage d'un moteur pas-à-pas exposé ici est appliqué de manière préférentielle à une alimentation en mode micro-pas, mais il va sans dire que le nombre de micro-pas par pas pour lequel le procédé reste valide peut évoluer d'une valeur supérieure à 100 micro-pas/pas à une valeur de 4 micro-pas/pas.

De même le mode de commande, tension ou courant, n'est pas fondamental pour la mise en oeuvre de l'invention.

De plus, le procédé de détection suivant l'invention est plus particulièrement appliqué aux motoréducteurs pas-à-pas de rapport de réduction pouvant évoluer d'une valeur supérieure à 1/1000 jusqu'à une valeur unitaire correspondant à l'utilisation du moteur en prise directe avec sa charge.

**Revendications**

1. Procédé de détection de butée d'un motoréducteur polyphasé synchrone commandé en mode «micro-pas» à m micro pas/pas, m étant un nombre entier supérieur ou égal à 4,

   - mettant en oeuvre la mesure de la somme des courants (I) circulant dans chacune des phases (A, B, C) du moto-réducteur,
   - un seuil (E) de détection de butée étant calculé par rapport à l'évolution de la somme desdits courants (I),
   - les valeurs de courant (I) échantillonnées étant traitées par une opération mathématique ou statistique,
   - et le seuil (E) de détection de butée étant déterminé par rapport au résultat de ce traitement,
   - l'opération mathématique permettant de discriminer des zones (1) de fonctionnement régulier, de zones (2) de fonctionnement en butée, et de fixer un seuil d'écart-type (E), pour des valeurs $N^2 * \sigma^2$ à partir duquel un micro-contrôleur ou ASIC, décide que le moto-réducteur est en butée ou calé, $\sigma$ étant l'écart-type des valeurs $X_i$ des N échantillons.

2. Procédé de détection selon la revendication 1, **caractérisé en ce qu'**il comporte une étape de détection de butée pour la discrimination d'une zone de fonctionnement synchrone en mode micro-pas du motoréducteur d'une zone d'arrivée sur une butée.

3. Procédé de détection selon la revendication 1, 2 ou 3, **caractérisé en ce qu'**il est appliqué aux moto-réducteurs de vanne de climatisation automobile.

**4.** Procédé de détection selon la revendication 1,2 ou 3, **caractérisé en ce qu'**il comporte une étape de détermination du couple maxi applicable par le motoréducteur.

**5.** Procédé de détection selon la revendication 1,2 ou 3, **caractérisé en ce qu'**il comporte une étape de détermination de la perte du synchronisme par le rotor du moto-réducteur.

**6.** Procédé de détection selon la revendication 1,2 ou 3, **caractérisé en ce qu'**il est appliqué aux motoréducteurs pas-à-pas de rapport de réduction 1 à r, r étant un nombre réel fini.

**7.** Moto-réducteur polyphasé synchrone commandé en mode «micro-pas» à m micro pas/pas, m étant un nombre entier supérieur ou égal à 4comportant un moyen de détection de butée **caractérisé en ce que** ledit moyen de détection de butée comporte :

 • un moyen de mesure de la somme des courants (I) circulant dans chacune des phases (A, B, C) du moto-réducteur,
 • un moyen de calcul d'un seuil (E) de détection de butée par rapport à l'évolution de la somme desdits courants (I),
 • un moyen de traitement des valeurs de courant (I) échantillonnées par une opération mathématique ou statistique, le seuil (E) de détection de butée étant déterminé par rapport au résultat de ce traitement,
 • ladite opération mathématique permettant de discriminer des zones (1) de fonctionnement régulier, de zones (2) de fonctionnement en butée, et de fixer un seuil d'écart-type (E), pour des valeurs $N^2 * \sigma^2$ à partir duquel un micro-contrôleur ou ASIC, décide que le moto-réducteur est en butée ou calé, $\sigma$ étant l'écart-type des valeurs $X_i$ des $N$ échantillons.

**Patentansprüche**

**1.** Verfahren zur Anschlagerkennung eines Mehrphasen-Synchrongetriebemotors, der im Mikroschritt-Betrieb mit m Mikroschritten/Schritt gesteuert wird, wobei m eine ganze Zahl größer/gleich 4 ist,

 • bei der die Summe der in jeder der Phasen (A, B, C) des Getriebemotors strömenden Stromstärken (I) gemessen wird,
 • wobei ein Grenzwert (E) zur Anschlagerkennung in Bezug auf die Entwicklung der Summe besagter Stromstärken (I) berechnet wird,
 • wobei die abgetasteten Werte der Stromstärke (I) in einer mathematischen oder statistischen Operation verarbeitet werden,
 • und der Grenzwert (E) zur Anschlagerkennung in Bezug auf das Ergebnis dieser Verarbeitung bestimmt wird,
 • wobei die mathematische Operation die Phasen-Demodulation von regelmäßigen Funktionsbereichen (1), Funktionsbereichen am Anschlag (2) sowie das Bestimmen eines Grenzwerts (E) der Standardabweichung für die Werte $N^2 * \sigma^2$ ermöglicht, auf deren Grundlage ein Mikrocontroller oder ASIC beschließt, dass der Getriebemotor am Anschlag oder still steht, wobei $\sigma$ gleich die Standardabweichung der Werte $X_i$ der abgetasteten N ist.

**2.** Erkennungsverfahren nach Anspruch 1, **dadurch gekennzeichnet, dass** es einen Schritt der Anschlagerkennung bei der Phasen-Demodulation eines synchronen Funktionsbereichs des Getriebemotors im Mikroschritt-Betrieb in einem Bereich der Ankunft am Anschlag umfasst.

**3.** Erkennungsverfahren nach Anspruch 1, 2 oder 3, **dadurch gekennzeichnet, dass** es auf Getriebemotoren für Fahrzeugklimatisierungsventile angewendet wird.

**4.** Erkennungsverfahren nach Anspruch 1, 2 oder 3, **dadurch gekennzeichnet, dass** es einen Schritt der Bestimmung des maximalen, vom Getriebemotor anwendbaren Drehmoments umfasst.

**5.** Erkennungsverfahren nach Anspruch 1, 2 oder 3, **dadurch gekennzeichnet, dass** es einen Schritt der Bestimmung des Synchronisationsverlustes durch den Rotor des Getriebemotors umfasst.

**6.** Erkennungsverfahren nach Anspruch 1, 2 oder 3, **dadurch gekennzeichnet, dass** es auf Getriebemotoren mit Schrittbetrieb mit einer Untersetzung von 1 bis r angewendet wird, wobei r eine endliche reelle Zahl ist.

**7.** Mehrphasen-Synchrongetriebemotor, der im Mikroschrittbetrieb mit m Mikroschritten/ Schritt gesteuert wird, wobei m eine ganze Zahl größer/gleich 4 ist, welcher ein Anschlagerkennungsmittel umfasst, **dadurch gekennzeichnet, dass** besagtes Anschlagerkennungsmittel folgendes umfasst:

> • ein Mittel zur Messung der Summe der in jeder der Phasen (A, B, C) des Getriebemotors strömenden Stromstärken (I),
> • ein Mittel zur Berechnung eines Grenzwerts (E) zur Erkennung des Anschlags in Bezug auf die Entwicklung der Summe besagter Stromstärken (I),
> • ein Mittel zur Verarbeitung der abgetasteten Werte der Stromstärke (I) durch eine mathematische oder statistische Operation, wobei der Grenzwert (E) zur Erkennung des Anschlags in Bezug auf das Ergebnis dieser Verarbeitung festgelegt wird,
> • wobei besagte mathematische Operation die Phasen-Demodulation der regelmäßigen Funktionsbereiche (1), von Funktionsbereichen am Anschlag (2) ermöglicht sowie das Festlegen eines Grenzwerts (E) einer Standardabweichung für die Werte $N^2 * \sigma^2$, auf deren Grundlage ein Mikrocontroller oder ASIC entscheidet, dass der Getriebemotor am Anschlag oder still steht, wobei $\sigma$ die Standardabweichung der Werte $X_i$ der abgetasteten N ist.

**Claims**

**1.** A method for detecting a blocking in a synchronous polyphase motor controlled in a "micro-step" mode, with m micro-step-by-step, with m being an integer greater than or equal to 4,

> • implementing the measurement of the sum of the currents (I) flowing in each of the phases (A, B, C) of the gear motor,
> • with a blocking detection threshold (E) being calculated relative to the evolution of the sum of said currents (I),
> • with the sampled current (I) values being processed by a mathematical or statistical operation,
> • and the blocking detection threshold (E) being determined relative to the result of such processing,
> • with the mathematical operation making it possible to discriminate regular operation zones (1) from zones (2) of blocked operation, and to define a standard deviation threshold (E), for $N^2 * \sigma^2$ values, from which a microcontroller or ASIC decides whether the gear motor is blocked or stalled, with $\sigma$ being the standard deviation of the $X_i$ values of the N samples.

**2.** A detection method according to claim 1, **characterized in that** it includes a step of detecting a blocking for discriminating a synchronous operation zone in the micro-step mode of the gear motor from a zone of arrival to a blocking.

**3.** A detection method according to claim 1, 2 or 3, **characterized in that** it is applied to gear motors of air-conditioning valves in motor vehicles.

**4.** A detection method according to claim 1, 2 or 3, **characterized in that** it comprises a step of determining the maximum torque which can be applied by the gear motor.

**5.** A detection method according to claim 1, 2 or 3, **characterized in that** it includes a step of determining the loss of synchronism of the rotor of the gear motor.

**6.** A detection method according to claim 1, 2 or 3, **characterized in that** it is applied to step-by-step gear motors with a reduction ratio of 1 to r, with r being a finite real number.

**7.** A synchronous polyphase gear motor controlled in a "micro-step" mode, with m micro-step-by-step, with m being an integer greater than or equal to 4, including blocking detection means, **characterized in that** said blocking detection means includes:

> • means for measuring the sum of the currents (I) flowing in each of the phases (A, B, C) of the gear motor,
> • means for calculating a blocking detection threshold (E) relative to the evolution of the sum of said currents (I),
> • means for processing the sampled current (I) values being by a mathematical or statistical operation, with the blocking detection threshold (E) being determined relative to the result of such processing,
> • with said mathematical operation making it possible to discriminate regular operation zones (1) from zones (2) of blocked operation, and to define a standard deviation threshold (E), for $N^2 * \sigma^2$ values, from which a microcontroller or ASIC decides whether the gear motor is blocked or stalled, with $\sigma$ being the standard deviation of the $X_i$ values of the N samples.

Figure 1

Figure 2

Figure 3

Figure 4

Figure 5

Figure 6

Figure 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0458159 A
- US 4672282 A
- US 20030117100 A
- EP 1178379 A
- US 20030155883 A
- DE 2960957 U
- DE 2361003
- US 2002173935 A